# EUROPÄISCHE PATENTSCHRIFT

(11) **EP 2 161 513 B1**
(45) Veröffentlichungstag und Bekanntmachung des Hinweises auf die Patenterteilung: **04.06.2014**
(21) Anmeldenummer: 09167369.9
(22) Anmeldetag: 06.08.2009
(51) Int. Cl.: F24F 13/065, B60H 1/34, F24F 13/10

(54) **Luftdüse**
Air jet
Tuyère d'air

(30) Priorität: 03.09.2008 DE 202008008827 U
(43) Veröffentlichungstag der Anmeldung: 10.03.2010
(73) Patentinhaber: Dr. Schneider Kunststoffwerke GmbH, 96317 Kronach (DE)
(72) Erfinder: Uhlenbusch, Olaf, 96275 Marktzeuln (DE)
(74) Vertreter: Pröll, Jürgen

(56) Entgegenhaltungen:
- EP-A1- 1 661 806
- DE-A1- 2 515 743
- GB-A- 1 277 184
- GB-A- 1 317 252
- US-A1- 2006 068 694

## Beschreibung

Die Erfindung betrifft eine Luftdüse zur Führung eines Luftstroms aus einem Luftzuführschacht oder aus einer Luftzuführleitung in Heizungs-, Lüftungs- oder Klimaanlagen mit den im Oberbegriff des Anspruchs 1 angegebenen Merkmalen.

EP 0 810 112 A 2 beschreibt eine Luftdüse für Fahrgasträume in Kraftfahrzeugen, die ein zylinderförmiges Gehäuse mit schwenkbaren Lamellen an der Luftausströmöffnung aufweist. Die Lamellen sind mit einer im Gehäuse schwenkbar gelagerten Schließklappe derart gekoppelt, dass in Abhängigkeit der Lamellenstellung das Ausströmen eines Luftstroms aus der Düse freigegeben oder unterbunden wird. Somit kann zwar die Intensität des austretenden Luftstroms verändert werden, jedoch nicht dessen Ausströmrichtung. Der Luftstrom kann lediglich in Längsrichtung an der Vorderseite der Düse ausströmen. Dies wird von den Fahrzeuginsassen zumindest bei starken Luftströmungen als unangenehm empfunden.

Aus DE 20 2004 004 229 U 1 ist eine Luftdüse bekannt, die einen direkten und/oder diffusen Luftaustritt ermöglicht. Hierfür weist diese Luftdüse im vorderen Bereich zusätzliche Luftleitmittel oder Ausströmöffnungen auf, mit denen der Luftstrom radial zur Längsachse der Düse abgelenkt werden kann.

Mit einer Luftdüse gemäß DE 20 2004 016 983 U 1 kann der austretende Luftstrom ebenfalls unterschiedlich ausgerichtet werden. Hier sind mehrere Horizontallamellen durch ein Koppelelement miteinander verbunden, welches eine abgestimmte Bewegung der Horizontallamellen bewirkt. Für eine diffuse Ausströmung werden die Lamellen durch das Koppelelement aufgefächert. Somit ist alternativ eine direkte Belüftung mit gebündeltem Luftstrahl oder eine diffuse Belüftung mit aufgefächertem Luftstrahl möglich.

DE 103 39 339 A 1 beschreibt eine weitere Luftdüse mit unterschiedlichen Ausströmvarianten. Bei dieser Luftdüse wird der Strömungskanal im Düsengehäuse in zwei baulich voneinander getrennte Teilströmungskanäle aufgeteilt, die ineinander liegend angeordnet sind. Der innere Teilströmungskanal ist schwenkbar gelagert und ermöglicht eine Richtungsänderung des ausströmenden Luftstroms. Im äußeren Teilströmungskanal, der fest gelagert ist, sind Strömungsschikanen angeordnet, die eine Verwirbelung der durchströmenden Luft bewirken. Mit dieser Luftdüse können in einfacher Handhabung unterschiedliche Luftströmungen realisiert werden. Allerdings ist hierfür ein erheblicher Bauraum-, Bauteil- und Kostenaufwand notwendig.

Aufgabe der Erfindung ist es, eine Luftdüse zu schaffen, die wenig Bauraum beansprucht und die mit kostengünstig herstell- und montierbaren Bauteilen eine einstellbare Drosselung und/oder Ablenkung des durchtretenden Luftstromes und die Ausbildung von unterschiedlich gerichteten Luftausströmungen ermöglicht.

Diese Aufgabe wird gelöst durch eine Luftdüse mit den Merkmalen des Anspruchs 1. Vorteilhafte Ausgestaltungen sind Gegenstand von Unteransprüchen, deren technische Merkmale in Ausführungsbeispielen näher beschrieben werden.

Die Drosseleinrichtung nach der Erfindung zeichnet sich dadurch aus, dass sie aus segmentförmigen Flächenelementen zusammengesetzt ist. Diese Segmente stehen in Wirkverbindung mit einem Betätigungsring, der von außen zugänglich ist und über dessen Betätigung die einseitig schwenkbar gelagerten Segmente im Neigungswinkel verstellbar sind. Wenn das Düsengehäuse eckig ist und in diesem eckigen Gebilde eine Drosseleinrichtung nach der Erfindung eingesetzt werden soll, so kann diese grundsätzlich auch eckig oder auch rund vorgesehen sein, je nachdem, welche Luftströmungsverhältnisse gesteuert werden sollen. Im Falle einer eckigen Anordnung können die Segmente an den Längsseiten aus einfachen Klappen bestehen, die einzeln oder gemeinsam im Neigungswinkel zur Längsachse des Düsengehäuses verstellbar sind. Die seitlichen Segmente sollten zweckmäßigerweise ein Dreiecksprofil aufweisen, so dass ein Trichter in einer trichterförmigen Drosseleinrichtung erzielbar ist, wenn alle Flächenelemente aufeinanderzugeklappt sind. Wenn diese Flächenelemente in einem gesonderten Rahmen im Gehäuse angeordnet sind, so kann der Rahmen so gestaltet sein, dass zwischen dem Rahmen und der Düsenwand noch ein Zwischenraum verbleibt, so dass eine seitliche Strömung möglich ist, obgleich der Trichter im geschlossenen Zustand keine Luft mehr durchlässt. Die Länge der einzelnen segmentförmigen Flächenelemente kann aber auch so gewählt sein, dass bodenseitig noch ein Luftspalt entsteht. Ebenso können die Flächenelemente so ausgebildet sein, dass zwischen den jeweils benachbarten ein Spalt entsteht, so dass auch bei Bildung eines Trichters eine Strömung durch diese Spalten möglich ist. Die Anzahl der verwendeten Flächenelemente ist ebenfalls frei wählbar. Es kann auch beispielsweise über die Längsseiten nur ein einziges Flächenelement vorgesehen sein, was diese Verstellmöglichkeit eröffnet.

Um das Verschwenken sicherzustellen, weisen die Flächenelemente angeformte oder aufgesetzte Mitnehmer auf, in denen Leitkurven oder Kulissen eingebracht sind, in die Mitnahmebolzen an dem Betätigungsring eingreifen. Bei der eckigen Ausführung ist dabei der Betätigungsring so im Gehäuse zu lagern, dass er vor- und rückschiebbar und von außen zugänglich ist. In diesem Fall werden die longitudinalen Kräfte über den Kopplungsmechanismus auf die verschwenkbar gelagerten Flächenelemente in eine Schwenkbewegung transferiert. Natürlich kann auch an dem Betätigungsring ein entsprechender Ansatz angeformt sein, der eine Leitkurve oder eine Kulisse aufweist, in die ein an dem Flächenelement vorstehender Bolzen eingreifen kann, um die Bewegungstransformation vorzunehmen. Je nach Bauausführung können dabei die entsprechenden Kopplungselemente innenseitig an dem Flächenelement einerseits und dem Betätigungsring andererseits oder auch außenseitig vorgesehen sein, wenn das Gehäuse einen entsprechenden Raum der Mantelwand zur Verfügung aufweist, um eine ungehinderte Verschiebung und ein Verschwenken der Kopplungselemente zu ermöglichen.

Die gleiche Technologie ist aber auch auf einen Einsatz anwendbar, also einen Düseneinsatz, der in dem Düsengehäuse beabstandet zur Außenwand vorgesehen ist. Dabei ist es gleich, ob der Einsatz um eine horizontale oder vertikale Achse verschwenkbar ist oder einen Kugelring oder ein kugelförmiges Gehäuse aufweist und drehbar innerhalb des rechteckförmigen oder quadratischen Querschnittes angeordnet ist.

Die Erfindung ist ferner auch einsetzbar, wenn die Luftdüse eine polygonale Querschnittsfläche im Austrittsbereich aufweist. Wenn die Drosseleinrichtung diese Form ebenfalls aufweisen soll, so können die entsprechenden Flächenelemente so zugeschnitten sein, dass sie einen polygonalen Kegel oder Kegelstumpf im geschlossenen Zustand bilden. Auch bei dieser Anordnung kann die Verstellung durch relative Verschiebung des Betätigungsringes innerhalb des Düsengehäuses oder innerhalb eines Lagerungseinsatzes erfolgen. Wenn die Luftdüse hingegen einen runden Querschnitt aufweist, so kann die Betätigung über den Betätigungsring auch durch Drehung desselben erfolgen, da dieser dann auch drehbar gelagert sein kann. Im Falle, dass eine drehbare Betätigung gewünscht ist, muss dafür Sorge getragen werden, dass die Kopplungselemente Ansätze mit Leitkurven aufweisen, in die der jeweilige Mitnehmerbolzen an dem Flächenelement oder am Betätigungsring bei komplementärer Ausführung schrägseitig entlang gleiten kann, damit eine Bewegungstransformation dazu führt, dass die V-förmig zugeschnittenen Segmente zusammen zu einem Kegel aus mehreren Teilflächen zusammengeführt werden können. Auch dieser Kegel kann durch Längenbemessung als Kegelstumpf ausgeführt sein oder auch als geschlossener Kegel. Es ist ersichtlich, dass durch diese erfindungsgemäße Ausgestaltung bei Anpassung an das Gehäuse oder an den Einsatz der Luftstrom durch das Gehäuse gänzlich unterbrochen werden kann, er kann aber auch nur teilweise unterbrochen oder durch Mittenstellungen verteilt abgelenkt werden, wodurch beispielsweise auch diffuse Austritte möglich sind. Wenn darüber hinaus die Flächenelemente in einem Lagerkorb gelagert sind, der in das Gehäuse einsetzbar ist, so kann dieser Lagerkorb zu den Gehäusewänden einen Abstand aufweisen, worüber zusätzlich eine Luftstromaufspaltung und -umlenkung möglich ist.

Die Flächenelemente können innen an der Innenwand des Gehäuses direkt oder an einem einsetzbaren Lagerring verschwenkbar befestigt sein oder aus der Mantelwand des Gehäuses freigeschnitten und an einer Seite verschwenkbar befestigt oder ausgeformt und über Filmscharniere gehalten werden. Sie können also Bestandteil der Gehäusewand selbst sein oder einer geschlossenen Wand eines Lagereinsatzes. Als Kopplungselemente können an den Flächenelementen Lagerrippen längs oder in Längsrichtung schräg verlaufend angeformt oder angebracht sein, in denen Leitkurven, Kulissen oder Längsausnehmungen eingebracht sind, in die Mitnehmer an einem Betätigungsring oder an einem im Gehäuse abgestützten zylinderförmigen Ring eingreifen. Bei relativer Verschiebung des Betätigungsringes in Längsrichtung oder durch Drehung werden dabei die entsprechenden Bewegungen in eine Schwenkbewegung der Flächenelemente transferiert. An den Flächenelementen können außen- oder innenseitig oder in Längsschlitzen auch Mitnehmer vorgesehen sein, die mit Leitkurven oder Kulissen in Ansätzen an dem Betätigungsring oder mit solchen in einem darin gelagerten zylinderförmigen Ring eingebrachten Leitkurven oder Kulissen derart zusammenwirken, dass bei Verschiebebewegung des Betätigungsringes die segmentförmigen Flächenelemente verschwenken und den Luftdurchdringungsquerschnitt verändern. Die Ansätze können auch so ausgeformt sein, dass diese bei Drehung des Betätigungsringes die Flächenelemente beim Zusammenwirken mit den Mitnehmern verschwenken. Die Lagerrippen, die die Lagerelemente bilden, können federnd ausgebildet sein, ebenso auch die Lagerschuhe. Es ist aber auch möglich, anstelle von federnden Lagerrippen Schenkel vorzusehen, die von einer Blatt- oder Schraubenfeder als Druckfeder angeordnet gegen den kugelförmigen Mantelring des Einsatzes gedrückt werden.

Des Weiteren ist es möglich, an der Innenseite der Mantelwand des Gehäuses, an dem Haltering oder an dem Einsatz innenseitig vorstehend Lagerelemente oder schalenförmige Lagerschuhe, insbesondere eine 3-Punkt- oder eine 5-Punkt-Lagerung bildend vorzusehen, die mit gebogenen, federnden Innenseiten einen Düseneinsatz mit kugelförmigem Mantelring rastend aufnehmen. Obgleich der Kugeleinsatz in jede Richtung ausrichtbar ist, kann er ebenfalls mit einer Drosseleinrichtung nach der Erfindung versehen sein, so dass zusätzlich die Strömung des Luftstromes durch die Durchtrittsöffnung des Einsatzes veränderbar ist bzw. der Luftstrom in dem Düsengehäuse insgesamt. An der Gehäusewand oder dem Haltering können auch Tragarme in den Innenraum des kugelförmigen Halteringes mit abgewinkelten Abschnitten eingreifen, an denen Lagerelemente oder Lagerschuhe nach außen vorstehend vorgesehen sind, so dass auch eine Lagerung über eine innenseitige Aufnahme möglich ist, um den Einsatz entsprechend in verschiedenen Richtungen ausrichten zu können. Der Verstellgrad ist dabei von der Kugelinnenform des Einsatzes im Wesentlichen bestimmt. Bei einer solchen Ausführung empfiehlt es sich, vorderseitig vor dem Kugeleinsatz eine Drosseleinrichtung nach der Erfindung in die Durchdringungsöffnung einzusetzen bzw. Wandabschnitte des vorderen Teiles des Durchbruches schwenkbeweglich zu lagern und über einen eingesetzten Betätigungsring zu verschwenken. Auch hierüber ist eine zusätzliche Veränderung des Luftstromes möglich.

Die Schwenkachsen der einzelnen Flächenelemente können entweder so angeordnet sein, dass das Zusammenführen der Flächenelemente in Sicht auf die Düse hinten erfolgt oder aber auch umgekehrt nach vorn. In entsprechender Weise müssen dann die Kopplungselemente so gelegt werden, dass das Verschwenken entweder durch Ziehen in die Verschließstellung oder in die Öffnungsstellung oder umgekehrt durch Drücken erfolgt. In entsprechender Weise kann auch bei einer runden Anordnung mit rundem Betätigungsring durch Links- oder Rechtsdrehung ein Schließen oder Öffnen bewirkt werden.

Die Erfindung ist ferner kombinierbar. So kann beispielsweise eine Drosseleinrichtung in einer Düse mit einem Einsatz kombiniert werden, der keine Drosseleinrichtung aufweist, jedoch drehbar oder verschwenkbar gelagert ist, so dass hierüber die gewünschte Strömungsrichtungen zusätzlich erzielt oder unterbrochen werden. Es ist ferner möglich, die Einsätze mit verschiedenen Drosseleinrichtungen zu versehen. Es ist auch möglich, anstelle eines Betätigungsringes ein Betätigungsorgan in Form eines Hebels zu verwenden, der durch Umlegen eine Verstellung der Flächenelemente über einen Koppelmechanismus ermöglicht. Auch kann seitlich zur Düse ein Stellrad angeordnet sein, über das die Drosseleinrichtung nach der Erfindung betätigbar ist. Dies erfolgt dann indirekt über einen Stellring, der mit dem Stellrad in Wirkverbindung steht und entweder verschiebbar oder verdrehbar angeordnet ist.

Eine Ausgestaltungsform der Luftdüse umfasst ein Luftleitelement und einen Luftleitkegel. Das Luftleitelement ist drehbar und schwenkbar im Gehäuse abgestützt und weist mehrere flächige Segmente mit einer halbkreisbogenförmigen Außenkontur auf, die ausgehend von der Mittellängsachse jeweils radial nach außen verlaufen. Diese Segmente stehen an ihrem in Strömungsrichtung vorderen Abschnitt mit dem Luftleitkegel in Wirkverbindung. Der Luftleitkegel weist an seinem in Strömungsrichtung vorderen Abschnitt eine umlaufende Ringkontur auf, an der mehrere zum Luftleitelement gerichtete Kegelsegmente schwenkbar gelagert sind.

Eine vorteilhafte Ausgestaltung sieht vor, dass die flächigen halbkreisbogenförmigen Segmente an ihrem zur Mittellängsachse des Luftleitelementes gerichteten inneren Abschnitt jeweils eine gerade und parallel zur Mittellängsachse des Luftleitelementes verlaufende Kontur aufweisen. Somit können das Luftleitelement und der Luftleitkegel vorzugsweise so zueinander angeordnet werden, dass die an der Ringkontur gelagerten Kegelsegmente in einer nicht geschwenkten Stellung an der geraden Kontur der halbkreisbogenförmigen Segmente anliegen.

Als weitere Ausgestaltung wird vorgeschlagen, dass dem Luftleitelement ein Strömungsteilerelement zugeordnet wird, das am Luftleitelement in Strömungsrichtung entgegengesetzt zum Luftleitkegel angeordnet ist. Dieses Strömungsteilerelement weist mehrere flächige Segmente auf, die ausgehend von der Mittellängsachse jeweils radial nach außen verlaufen und eine zunächst parallel zur Mittellängsachse verlaufende Außenkontur aufweisen, die in ihrem in Strömungsrichtung vorderen Abschnitt schräg nach innen zur Mittellängsachse abfällt. Somit können das Strömungsteilerelement und der Luftleitkegel vorzugsweise so zueinander angeordnet werden, dass die an der Ringkontur gelagerten Kegelsegmente in vollständig geschwenkter Stellung an der schräg abfallenden Kontur der flächigen Segmente anliegen.

Das Luftleitelement und der Luftleitkegel sind mit einem Betätigungsring verlagerbar. Hierbei wird vorgeschlagen, dass der Betätigungsring sowohl am Luftleitelement als auch am Luftleitkegel abgestützt ist.

Die Verbindung zwischen dem Betätigungsring und dem Luftleitkegel und/oder dem Luftleitelement kann als Rastverbindung ausgestaltet werden. Dies wird beispielsweise erreicht, indem am Betätigungsring Vorsprünge ausgestaltet sind, die mit konturgleichen Aussparungen an der Ringkontur vom Luftleitkegel in Wirkverbindung gebracht werden.

Alternativ kann diese Verbindung als Kulissenführung ausgestaltet werden. Dies wird beispielsweise erreicht, indem am Betätigungsring Aussparungen ausgestaltet sind, in denen jeweils ein Abschnitt der flächigen Segmente des Luftleitelementes geführt wird.

Eine besonders gute Handhabung ergibt sich, sofern das Luftleitelement in einem zylinderförmigen Ring gelagert wird, der an der Innenwand des Gehäuses abgestützt ist. Hierbei können die Verbindungen zwischen Luftleitelement und zylinderförmigem Ring sowie zwischen zylinderförmigem Ring und Gehäuse alternativ als Rastverbindung oder auch als Kulissenführung ausgestaltet werden.

Die erfindungsgemäß ausgestaltete Luftdüse beansprucht wenig Bauraum und ermöglicht mit kostengünstig herstell- und montierbaren Bauteilen die Ausbildung unterschiedlich gerichteter Luftausströmungen.

Die Bedienung der Drosseleinrichtung und/oder der dafür vorgesehenen Mittel, wie Stellring, sowie die Bedienung anderer verstellbarer Elemente der Düse kann grundsätzlich manuell direkt erfolgen oder aber auch über eine mechanische Fernbedienung, wobei die entsprechenden Stellelemente abgerückt zur Düse angeordnet sein können und mittels Kraftübertragung und Getriebe die entsprechenden Bewegungen ausgelöst werden, die erforderlich sind, um die Verstellungen vorzunehmen. Die Einstellung der verstellbaren Glieder kann aber auch über Stellmotoren erfolgen, beispielsweise durch Tastensteuerung über ein Steuergerät, das diese Stellmotoren ansteuert. Die Stellmotoren können direkt wirkend an der Düse vorgesehen oder auch über mechanische Kopplungsglieder und Getriebe mit den verstellbaren Elementen gekoppelt sein. Die Steuerung kann auch mittels eines Fernbedienungsgebers erfolgen, wenn dieses gewünscht ist. Zu diesem Zweck kann ein Steuergerät integriert sein, das einen Fernsteuerempfänger aufweist, um die Steuerung zu bewirken.

Die Steuerung kann auch über Aktuatoren erfolgen, die in Abhängigkeit von abgespeicherten Einstell-Nutzerdaten die Einstellungen verändern. Wenn beispielsweise von einer älteren Einstellung die Steuerung so vorprogrammiert ist, dass bestimmte Düsen auf eine bestimmte Drosselung eingestellt sein sollen, so kann dieser Speicherwert abgespeichert sein und durch Knopfdruck oder durch Einstecken eines Schlüssels oder einer Schlüsselkarte in das Zündschloss automatisch den Aktuator neu einstellen. Der Wert kann aber auch verändert werden. Eine Steuerung der beweglichen Teile ist also universell möglich.

Ausführungsbeispiele der Erfindung sind in der Zeichnung dargestellt und werden nachfolgend beschrieben.

In den Zeichnungen zeigen:
- Fig. 1: in einer perspektivischen Darstellung eine Runddüse mit einem Düseneinsatz in erfindungsgemäßer Ausgestaltung mit eingedrücktem Betätigungsring,
- Fig. 2: die in Fig. 1 dargestellte Runddüse mit vorgezogenem Betätigungsring zur Betätigung einer innerhalb der Düse angeordneten Drosseleinrichtung,
- Fig. 3: einen Längsschnitt durch die Düse nach Fig. 1 im eingeschobenen Zustand des Betätigungsringes,
- Fig. 4: einen Längsschnitt durch die Düse nach Fig. 2 mit vorgezogenem Betätigungsring,
- Fig. 5: einen Schnitt durch die Düse nach Fig. 1 jedoch mit verschwenktem Einsatz,
- Fig. 6: eine Explosionszeichnung einer Düse, wie sie in den Fig. 1 und 2 dargestellt ist, jedoch mit einem anderen Einsatz, aus dem insbesondere die Details des Luftleitkegels und die Lagerung der Flächenelemente ersichtlich sind,
- Fig. 7: in einer Explosionszeichnung die Teile einer Düse mit einem anderen Einsatz und einer anderen Mitkopplungsmechanik für die Flächenelemente,
- Fig. 8: eine weitere Explosionszeichnung mit einem geänderten Lagerring und geänderten Kopplungselementen für die Flächenelemente,
- Fig. 9: den grundsätzlichen Aufbau einer erfindungsgemäßen Luftdüse in Explosivdarstellung,
- Fig. 10: die erfindungsgemäße Luftdüse in Seitenansicht als Schnittdarstellung in einer ersten Stellung des Betätigungsringes,
- Fig. 11: die Luftdüse gemäß Fig. 10 in etwas veränderter Stellung des Luftleitelementes,
- Fig. 12: die Luftdüse gemäß Fig. 10 in perspektivischer Ansicht,
- Fig. 13: die erfindungsgemäße Luftdüse in Seitenansicht als Schnittdarstellung in einer zweiten Stellung des Betätigungsringes,
- Fig. 14: die Luftdüse gemäß Fig. 13 in etwas veränderter Stellung des Luftleitelementes und
- Fig. 15: die Luftdüse gemäß Fig. 14 in perspektivischer Ansicht.

Die in den Zeichnungen dargestellten Luftdüsen sind zur Führung eines Luftstroms in Heizungs-, Lüftungs- oder Klimaanlagen geeignet. Derartige Luftdüsen bestehen aus einem Gehäuse, das in einem Wanddurchbruch einsetzbar ist, zum Beispiel in einer Instrumententafel eines Kraftfahrzeuges. Das Gehäuse hat eine vorderseitige Luftausströmöffnung und einen rückseitigen Anschluss für einen Luftzuführschacht oder für eine Luftzuführleitung. Ein derartiger Aufbau einer Luftdüse ist an sich bekannt, so dass nachfolgend nur Merkmale in den Darstellungen näher erläutert werden, die für die vorliegende Erfindung wesentlich sind.

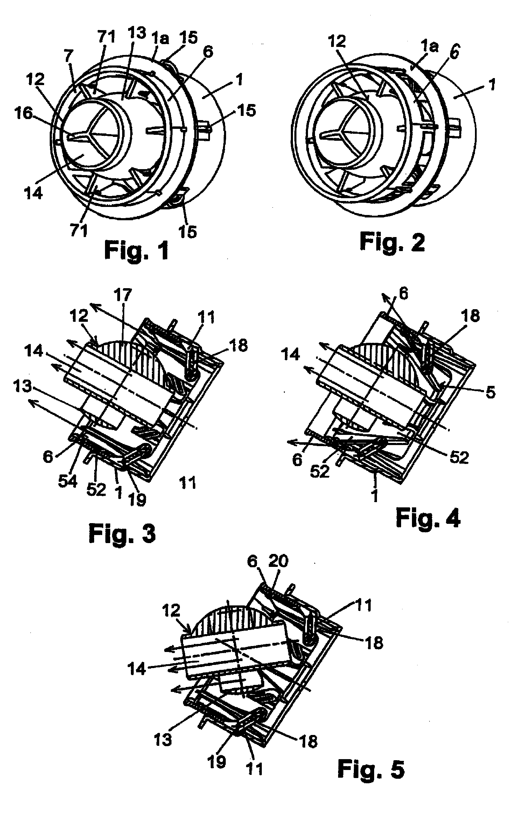

In den Fig. 1 bis 5 ist ein erstes Beispiel einer Luftdüse nach der Erfindung dargestellt. Die Düse, die in der perspektivischen Darstellung in den Fig. 1 und 2 dargestellt ist, besteht jeweils aus einem Gehäuse 1, das einen Blendrahmen 1a aufweist. Bei der Düse handelt es sich um eine Runddüse. Diese ist also in einem runden Durchbruch in einem Armaturenbrett einsetzbar. Durch angeformte oder angebrachte Federn, die beabstandet zum Blendrahmen vorgesehen sind, wird eine Rastverbindung erreicht. Zu diesem Zweck wird das Gehäuse 1 in einen runden Durchbruch in einem Armaturenbrett hineingedrückt. Die Federn rasten dann hinter die Armaturenbrettwand. Der Gegenhalt wird durch den Blendrahmen 1a sichergestellt.

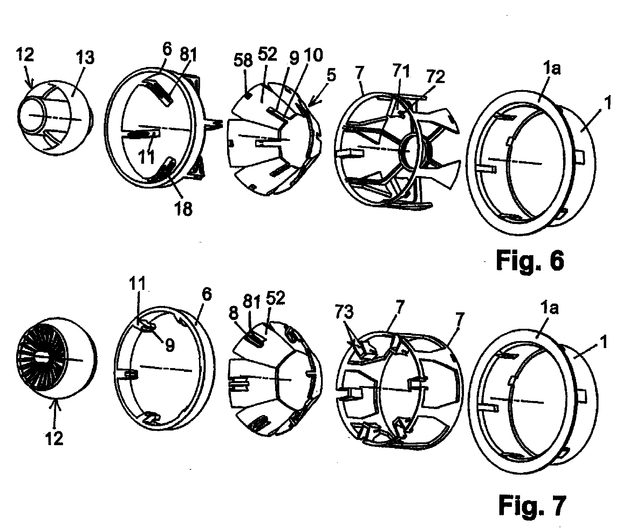

Aus den Fig. 1 und 2 ist ferner ersichtlich, dass ein Betätigungsring 6 in das Gehäuse einfasst. Dieser Betätigungsring weist im Ausführungsbeispiel nur einen schwach angedeuteten Blendrahmen auf, der als Griffleiste ausgebildet ist. Aus Fig. 1 ist ferner ersichtlich, dass innerhalb des Blendrahmens ein Lagering 7 hervorsteht. Der Lagerring 7 ist als Käfig ausgebildet und an der Innenseite der Mantelwand des Gehäuses 1 fixiert. Bezüglich der Ausbildung und der Funktionsweise wird später noch anhand der Fig. 6 eingegangen.

Der Betätigungsring 6 ist in Fig. 1 in das Gehäuse eingedrückt dargestellt und in Fig. 2 hervorgezogen. Er ist also verschiebbar im Gehäuse gelagert. Er steht mit dem Lagerring 7 nicht in Wirkverbindung, kann also gegenüber diesem frei bewegt werden. An dem Lagerring 7 sind Lagerelemente 71 angeformt, die am Umfang verteilt angeordnet sind. So sind dort sechs solche Lagerelemente 71 dargestellt. Die Lagerelemente weisen innenseitig eine Bogenform auf, die der äußeren Kugelform des Mantelringes 13 des Einsatzes 12 entspricht. Es ist ersichtlich, dass die Stirnflächen an dem Mantelring 13 selbsthaltend anliegen, so dass dieser in der Lage fixiert ist, aber in jede Richtung außenseitig verstellt werden kann, so dass der Kanal 14 innerhalb der Aufnahme in beliebige Neigungswinkel verstellt werden kann. In dem Kanal 14 sind ferner um 120° versetzt drei Leitrippen vorgesehen, um den Luftstrom direkt auf eine Person leiten zu können, wenn die entsprechende Ausrichtung des Einsatzes erfolgt.

In den Fig. 3, 4 und 5 ist die Düse gemäß Fig. 1 und 2 jeweils im Schnitt dargestellt, allerdings mit einem anderen Einsatz 12. Dieser Einsatz 12 weist einen Mantelring 13 auf, sowie auf der anderen Seite ein bogenförmiges Verschlussteil 17. Der Einsatz 12 weist ferner einen Kanal 14 auf, durch den der Luftstrom von innen nach außen durch die Düse hindurchströmen kann. Aus der Darstellung ist ersichtlich, dass auch in dem Gehäuse 1 der Betätigungsring 6 verschiebbar gelagert ist, er kann also vorgezogen werden, was aus Fig. 4 ersichtlich ist, oder hineingeschoben werden, was aus Fig. 3 ersichtlich ist. Der Betätigungsring 6 ist mit sechs am Umfang verteilt angeordneten Ansätzen 11 versehen, die einen schräg verlaufenden Ast aufweisen, in dem eine Kulisse 18 eingearbeitet ist. In die Kulisse 18 greift in einen Mitnehmerzapfen 19 ein, der seitlich oder in einem Schlitz in dem Flächenelement 52 angebracht ist. Es ist deshalb ersichtlich, dass aus der dargestellten Position in Fig. 3 der Mitnehmerzapfen beim Vorziehen des Betätigungsringes 6 in der schräg nach innen im Ansatz 11 verlaufenden Kulisse 18 automatisch nach innen gedrängt wird und hierüber das jeweils zugeordnete Flächenelement 52 um die obere Schwenkachse 54 nach innen schwenkt, wobei alle umlaufend vorgesehenen, trapezförmig zugeschnittenen Flächenelemente einen Kegelstumpf bilden. Dies ist aus Fig. 4 ersichtlich. Wird nun wiederum auf dem Betätigungsring 6 gedrückt, so erfolgt eine Bewegungstransformation durch die Schrägen der Kulisse 18 in umgekehrter Weise und die Flächenelemente 52 nehmen wiederum die parallele Position zur Gehäusemantelwand ein. Die Fig. 3 und 4 zeigen ferner, dass der Kanal 14 senkrecht ausgerichtet zum Düsengehäuse 1 verläuft. Es ist ersichtlich, dass der von hinten eintretende Luftstrom verstärkt durch den Kanal 14 ausströmt, wenn die in Fig. 4 eingezeichnete Position des Luftleitkegels 5 eingenommen wird. Aus Fig. 5 ist ersichtlich, dass zumindest in der eingedrückten Position des Betätigungsringes 6 auch der Einsatz 12 verschwenkt werden kann, so dass der Kanal 14 nur noch seitlich eintretende Luft nach unten austreten lässt. Der zwischen dem Mantelring 13 und dem Kanal vorgesehene Zwischenraum bildet ebenfalls die Möglichkeit, dass die Luft dadurch ausströmt. Es ist ersichtlich, dass hierüber vielseitig eine Ablenkung möglich ist.

In Fig. 6 ist ein Gehäuse 1 mit einer Runddüse dargestellt, das einen Blendrahmen 1a umlaufend aufweist. Ferner sind in die Gehäusewand Lagerungsnuten eingeschnitten. In dieses Gehäuse ist ein Lagerring 7, der Korbform besitzt, einsetzbar, wobei die an den Lagerelementen 71 und am Ring 7 vorgesehenen Vorsprünge in die Lagerschlitze der Wand eingreifen, wodurch der Ring verdrehsicher gelagert ist. Die Lagerelemente weisen federnde Lagerrippen 72 auf, die innen eine kreisbogenförmige Kontur aufweisen, so dass sie gemeinsam ein Lager für den Mantelring 13 eines Einsatzes 12 bilden. An den Befestigungspunkten der Lagerelemente 71 befinden sich ferner Schwenklagerformen von Lagerösen, in die die Lagerquerteile an den Flächenelementen 52 eingreifen, worüber die Flächenelemente 52 verschwenkbar gelagert sind. Die Flächenelemente 52 weisen ferner mittige, untenseitige Schlitze auf, in die Mitnehmer 9, nämlich kleine zapfenförmige Ansätze, vorstehen. Diese Mitnehmer 9 rasten in die Leitkurve 81 bzw. Kulisse 18 an den abgewinkelten Ansätzen 11 ein, die an einem Betätigungsring 6 untenseitig vorstehend angebracht sind. Die Ansätze 11 stehen also nach der Montage innenseitig vor. Es ist somit ersichtlich, dass durch relative Verschiebung des Betätigungsringes 6 die Flächenelemente 52 um ihre Schwenkachsen beim Vorziehen nach außen schwenken und beim Niederdrücken nach innen und die aus der mittigen Darstellung ersichtliche Luftleitkegelform 5 annehmen. Alle übrigen Zwischenpositionen sind ebenfalls einnehmbar.

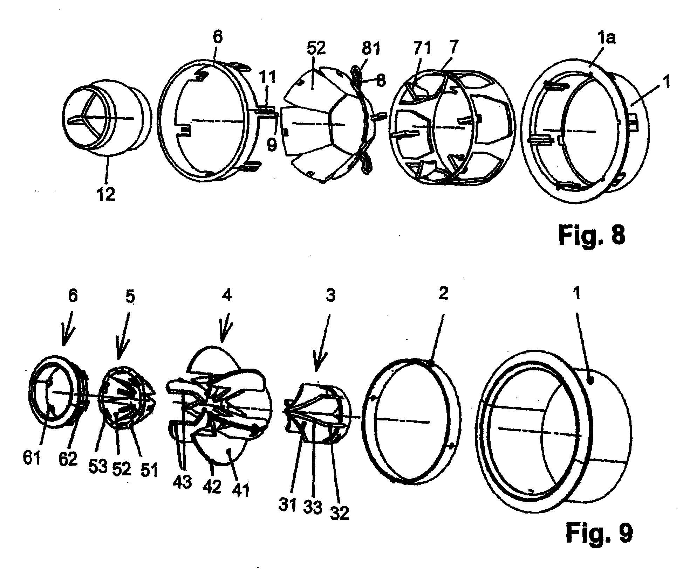

Auch in Fig. 7 ist in einer Explosionszeichnung ein ähnliches Beispiel wie in Fig. 6 dargestellt. Das Gehäuse 1 ist das gleiche, der Lagerring 7 ist ebenfalls korbförmig ausgebildet, jedoch weist er keine untenseitige Verbindung auf, wie es aus Fig. 6 ersichtlich ist. Er weist also eine reine Zylinderform auf. Des Weiteren sind am Umfang verteilt Lagerausnehmungen 73 eingezeichnet, in die die Ansätze 11 an der Innenseite des Betätigungsringes geführt sind. Dabei greifen die Ansätze 11 mit ihren beiden an den Innenseiten der Schenkel vorgesehenen Mitnehmer 9 in die Leitkurve 81 in der Lagerrippe 8 ein, die innenseitig vorstehend an dem Flächenelement 52 vorgesehen ist, so dass beim Hineinschieben des Betätigungsringes 6 in das Gehäuse 1 die schwenkbar am Ring 7 gelagerten Flächenelemente automatisch nach außen gedrückt werden und beim Vorziehen des Betätigungsringes 6 in die dargestellte Kegelstumpfform zusammengefügt werden. Die Lageransätze an der Innenseite des Lagerringes 7 weisen innenseitig bogenförmige Lagerabschnitte 20 auf, die den eingesetzten Ansatz umschließen und diesem einen Lagerhalt geben, so dass dieser Einsatz 12 ebenfalls in verschiedene Richtungen ausgeführt werden kann. In Fig. 8 ist ein weiteres Ausführungsbeispiel dargestellt, bei dem das Gehäuse 1 mit dem Blendrahmen 1a identisch ist mit den in den Fig. 6 und 7. Lediglich der Lagerring 7, der auch als Käfig ausgebildet ist, weist eine vom Lagerring 7 in Fig. 7 abweichende Struktur auf. Hier sind lediglich Stützrippen als Lagerelemente 71 vorgesehen, die den Einsatz 12 halten. Abweichend weisen die Flächenelemente 52, die segmentförmig zugeschnitten sind, außenseitig Lagerrippen 8 mit Leitkurven 81 bzw. Kulissen 18 auf. Diese sind so ausgebildet, dass durch diese von den an den außenseitig am Betätigungsring 6 vorgesehenen Ansätzen 11, die gabelförmig ausgebildet sind, die Mitnehmer 9 seitlich erfasst werden, so dass hierüber die Bewegungstransformation der Schiebebewegung des Betätigungsringes 6 in dem Gehäuse 1 in eine Schwenkbewegung der Flächenelemente 52 transformiert wird.

Auch dieses Beispiel zeigt, dass die Kopplungselemente unterschiedliche Struktur aufweisen. Darüber hinaus bestehen die Teile selbstverständlich aus Kunststoff, da sie aus diesem Material billigst hergestellt werden. Die Teile sind einfach zusammensteckbar, wie aus den Explosionszeichnungen ersichtlich ist, so dass kein hoher Montageaufwand besteht. Selbst die Schwenklager können angespritzte Kunststoffteile sein, da sie keinen zu hohen mechanischen Belastungen ausgesetzt sind.

Fig. 9 zeigt die Einzelteile einer erfindungsgemäßen Luftdüse in Explosivdarstellung. Demzufolge umfasst die Luftdüse ein Gehäuse 1, einen zylinderförmigen Ring 2, ein Strömungsteilerelement 3, ein Luftleitelement 4, einen Luftleitkegel 5 und einen Betätigungsring 6. Mit diesen Bauteilen können die Richtung und die Intensität des aus der Luftdüse austretenden Luftstroms verändert werden, indem durch eine Relativverschiebung von Luftleitelement 4, Strömungsteilerelement 3 und Luftleitkegel 5 Segmentteile einerseits in eine Öffnungsstellung und andererseits in eine Verschließstellung innerhalb des zylindrischen Gehäuses 1 verbringbar sind.

Das Luftleitelement 4 ist drehbar und schwenkbar im Gehäuse 1 abgestützt. Dabei ist das Luftleitelement 4 beispielsweise im zylinderförmigen Ring 2 gelagert, der an der Innenwand des Gehäuses 1 abgestützt ist. Die Verbindungen zwischen dem Luftleitelement 4 und dem zylinderförmigem Ring 2 sowie zwischen dem Ring 2 und dem Gehäuse 1 können als Rastverbindung oder Kulissenführung ausgestaltet werden.

Das Luftleitelement 4 weist mehrere flächige Segmente 41 auf, die von der Mittellängsachse jeweils radial nach außen verlaufen und eine halbkreisbogenförmige Außenkontur 42 aufweisen. An den zur Mittellängsachse gerichteten inneren Abschnitt weisen die Segmente 41 jeweils eine gerade und parallel zur Mittellängsachse des Luftleitelementes 4 verlaufende Kontur 43 auf.

Der Luftleitkegel 5 weist an seinem in Strömungsrichtung vorderen Abschnitt eine umlaufende Ringkontur 51 auf. An dieser Ringkontur 51 sind mehrere Kegelsegmente 52 schwenkbar gelagert, die zum Luftleitelement 4 gerichtet sind.

Die Segmente 41 des Luftleitelementes 4 stehen an ihrem in Strömungsrichtung vorderen Abschnitt mit dem Luftleitkegel 5 in Wirkverbindung. Dabei sind das Luftleitelement 4 und der Luftleitkegel 5 so zueinander angeordnet, dass die an der umlaufenden Ringkontur 51 gelagerten Kegelsegmente 52 in nicht geschwenkter Stellung an der geraden Kontur 43 der Segmente 41 anliegen.

Das Strömungsteilerelement 3 ist am Luftleitelement 4 in Strömungsrichtung entgegengesetzt zum Luftleitkegel 5 angeordnet. Dieses Strömungsteilerelement 3 weist mehrere flächige Segmente 31 auf, die ausgehend von der Mittellängsachse jeweils radial nach außen verlaufen und eine parallel zur Mittellängsachse verlaufende Außenkontur 32 aufweisen. Diese gerade Kontur 32 geht in ihrem in Strömungsrichtung vorderen Abschnitt in eine schräg nach innen in Richtung der Mittellängsachse abfallende Kontur 33 über.

Die Konturabschnitte 33 des Strömungsteilerelementes 3 stehen mit dem Luftleitkegel 5 in Wirkverbindung. Dabei sind das Strömungsteilerelement 3 und der Luftleitkegel 5 so zueinander angeordnet, dass die an der umlaufenden Ringkontur 51 gelagerten Kegelsegmente 52 des Luftleitkegels 5 in einer vollständig geschwenkten Stellung an der schräg abfallenden Kontur 33 der flächigen Segmente 31 des Strömungsteilerelementes 3 anliegen.

Das Luftleitelement 4 und der Luftleitkegel 5 können mit dem Betätigungsring 6 in ihrer Stellung verlagert werden. Hierfür ist der Betätigungsring 6 am Luftleitelement 4 und am Luftleitkegel 5 abgestützt, wobei diese Verbindung alternativ als Rastverbindung oder als Kulissenführung ausgestaltet werden kann.

Im gezeigten Ausführungsbeispiel sind am Betätigungsring 6 Vorsprünge 61 ausgestaltet, die mit konturgleichen Aussparungen 53 an der umlaufenden Ringkontur 51 des Luftleitkegels 5 in Wirkverbindung gebracht werden. Somit wird eine einfach zu montierende Rastverbindung erreicht.

Weiterhin sind am Betätigungsring 6 sind Aussparungen 62 ausgestaltet, in denen jeweils ein in Strömungsrichtung vorderer Abschnitt der flächigen Segmente 41 des Luftleitelementes 4 geführt wird. Somit wird eine einfach zu montierende Kulissenführung realisiert.

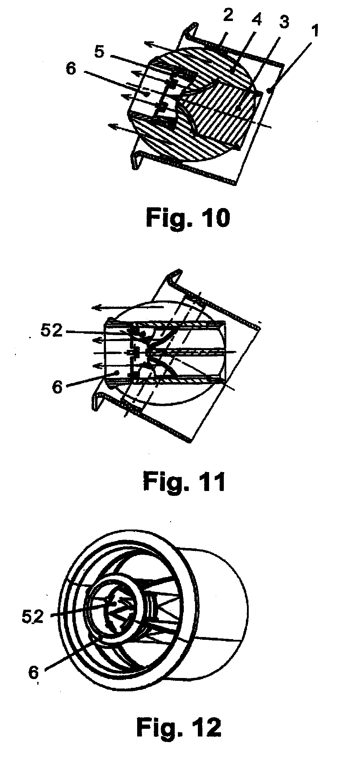

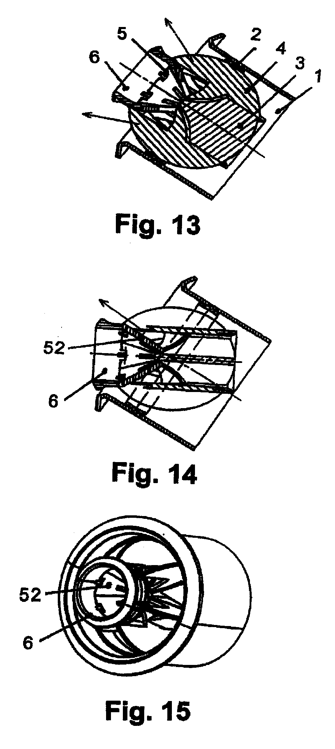

Das Luftleitelement 4 ist gemäß Fig. 10 und 13 mit der Längsachse in Richtung der Längsachse des Gehäuses 1 ausgerichtet.

In Fig. 11 und 14 ist das Luftleitelement 4 in dem Ring 2 in seiner Relativposition gegenüber dem Gehäuse 1 geschwenkt worden, so dass der Luftstrom - unabhängig von seiner konkreten und nachfolgend erläuterten Form - in einer etwas anderen Richtung als in Fig. 10 und 13 aus der Luftdüse austritt.

Aus Fig. 10 bis 13 ist eine Stellung der Luftdüse mit eingedrücktem Betätigungsring 6 ersichtlich. In dieser Stellung sind die an der umlaufenden Ringkontur 51 des Luftleitkegels 5 gelagerten Kegelsegmente 52 nicht geschwenkt. Die Kegelsegmente 52 liegen an der geraden Innenkontur 43 der flächigen Segmente 41 des Luftleitelementes 4 an. Somit ergibt sich über die gesamte Breite des Luftleitelementes 4 eine zu dessen Längsachse parallele Luftausströmung, die in Fig. 2 und Fig. 3 mit Pfeilen stilisiert ist.

Aus Fig. 13 bis 15 ist eine Stellung der Luftdüse mit herausgezogenem Betätigungsring 6 ersichtlich. In dieser Stellung sind die an der umlaufenden Ringkontur 51 des Luftleitkegels 5 gelagerten Kegelsegmente 52 nach innen geschwenkt und liegen an der schräg abfallenden Kontur 33 der flächigen Segmente 31 des Strömungsteilerelementes 3 an. Somit ergibt sich eine gegenüber der Längsachse des Luftleitelementes 4aufgefächerte Luftausströmung, die in Fig. 13 und 14 mit Pfeilen stilisiert ist.

### Bezugszeichenliste

- 1: Gehäuse
- 1a: Blendrahmen
- 2: zylinderförmiger Ring

- 3: Strömungsteilerelement
- 31: flächiges Segment
- 32: gerade Außenkontur
- 33: schräge Außenkontur

- 4: Luftleitelement
- 41: flächiges Segment
- 42: halbkreisbogenförmige Außenkontur
- 43: gerade Innenkontur

- 5: Luftleitkegel
- 51: umlaufende Ringkontur
- 52: Kegelsegment/Flächenelemente
- 53: Aussparung an Ringkontur
- 54: Schwenkachse
- 55: Lagerungsteile

- 6: Betätigungsring
- 61: Vorsprung
- 62: Aussparung

- 7: Lagerring
- 8: Lagerrippe
- 81: Leitkurven
- 9: Mitnehmer
- 10: Schlitze
- 11: Ansatz
- 12: Düseneinsatz
- 13: Mantelring

- 71: Lagerelement
- 72: Lagerrippen
- 73: Lagerausnehmung

- 14: Kanal/Strömungsrohr
- 15: Federn
- 16: Leitrippen
- 17: Verschlussteil
- 18: Kulisse
- 19: Mitnehmerzapfen
- 20: Lagerabschnitt

## Patentansprüche

1. Luftdüse zur Führung eines Luftstroms aus einem Luftzuführschacht oder aus einer Luftzuführleitung in Heizungs-, Lüftungs- oder Klimaanlagen, insbesondere für Fahrgasträume in Kraftfahrzeugen, bestehend aus einem Gehäuse, das in einen Wanddurchbruch einsetzbar oder hinter diesem befestigbar ist und das einen rückseitigen Anschluss für einen Luftzuführschacht oder eine Luftzuführleitung sowie eine vorderseitige Luftausströmöffnung aufweist, wobei im Innenraum des Gehäuses eine den Luftstrom veränderbare Drosseleinrichtung und/oder ein Einsatz mit einer Drosseleinrichtung vorgesehen ist, **dadurch gekennzeichnet, dass** die Drosseleinrichtung aus an den Innenwänden des Gehäuses (1) und/oder an den Innenwänden des Einsatzes mit Drosseleinrichtung angebrachten segmentförmigen Flächenelementen (52) besteht, die um einseitig und quer zur Strömungsrichtung verlaufende Achsen, einen Trichter oder einen Luftleitkegel (5) bildend, schwenkbar gelagert sind, dass an dem Gehäuse (1) oder dem Einsatz mit Drosseleinrichtung verschiebbar und/oder verdrehbar ein Betätigungsring (6) vorderseitig gelagert ist, der über Kopplungselemente und Leitkurvenführungen oder Kulissenführungen mit den Flächenelementen (52) derart gekoppelt ist, dass diese beim Vorziehen und/oder Aufdrücken durch relative Verschiebung gegenüber dem Gehäuse (1) oder durch Drehung in die eine oder entgegengesetzte Drehrichtung verschwenken.

2. Luftdüse nach Anspruch 1, **dadurch gekennzeichnet, dass** die Flächenelemente (52) innen an der Innenwand des Gehäuses (1) direkt oder an einem einsetzbaren Lagerring (7) verschwenkbar befestigt sind oder aus der Mantelwand des Gehäuses (1) freigeschnitten und an einer Seite verschwenkbar befestigt oder ausgeformt und über ein Filmscharnier gehalten sind, dass an den Flächenelementen (52) Lagerrippen (8) längs oder in Längsrichtung schräg verlaufend angeformt oder angebracht sind, in denen Leitkurven (81), Kulissen oder Längsausnehmungen eingebracht sind, in die Mitnehmer (9) an einem Betätigungsring (6) oder an einem im Gehäuse abgestützten zylinderförmigen Ring (2) eingreifen, und dass bei relativer Verschiebung des Betätigungsringes (6) in Längsrichtung oder durch Drehung die Flächenelemente (52) verschwenken.

3. Luftdüse nach Anspruch 1, **dadurch gekennzeichnet, dass** die Flächenelemente (52) innen an der Innenwand des Gehäuses (1) direkt oder an einem einsetzbaren Lagerring (7) verschwenkbar befestigt sind oder aus der Mantelwand des Gehäuses (1) freigeschnitten und an einer Seite verschwenkbar befestigt oder ausgeformt und über ein Filmscharnier gehalten sind, dass an den Flächenelementen (52) außen- oder innenseitig oder in Längsschlitzen (10) Mitnehmer (9) vorgesehen sind, die mit Leitkurven (81) oder Kulissen in Ansätzen (11) an dem Betätigungsring (6) oder mit solchen in einem darin gelagerten zylinderförmigen Ring (2) eingebrachten Leitkurven (81) oder Kulissen derart zusammenwirken, dass bei Verschiebebewegung des Betätigungsringes (6) die segmentförmigen Flächenelemente (52) verschwenken und den Luftdurchdringungsquerschnitt verändern oder dass die Ansätze so ausgeformt sind, dass diese bei Drehung des Betätigungsringes (6) die Flächenelemente (52) beim Zusammenwirken mit den Mitnehmern (9) verschwenken.

4. Luftdüse nach Anspruch 1, 2 oder 3, **dadurch gekennzeichnet, dass** an der Innenseite der Mantelwand des Gehäuses (1), an dem Haltering (2) oder an dem Einsatz innenseitig vorstehend Lagerelemente (71) oder schalenförmige Lagerschuhe, insbesondere eine 3-Punkt-, 4-Punkt- oder 5-Punkt-Lagerung bildend, vorgesehen sind, die mit ihren gebogenen federnden Innenseiten einen Düseneinsatz (12) mit kugelförmigem Mantelring (13) rastend und schwenkbeweglich aufnehmen, oder dass an der Gehäusewand (1) oder an dem Haltering (2)Tragarme mit in den Innenraum des kugelförmigen Mantelrings (13) hineinreichende abgewinkelte Abschnitte vorgesehen sind, an denen Lagerelemente (71) oder Lagerschuhe nach außen vorstehend, gegen die Innenseite des kugelförmigen Mantelrings (13) drückend, vorgesehen sind.

5. Luftdüse nach Anspruch 1, 2 oder 3, **dadurch gekennzeichnet, dass** der Einsatz ein Luftleitelement (4) enthält, das drehbar und/oder schwenkbar im Gehäuse (1) abgestützt ist und mehrere flächige Segmente (41) aufweist, die ausgehend von der Mittenlängsachse des Luftleitelementes (4) jeweils radial nach außen verlaufen und eine halbkreisbogenförmige oder eine bogenförmige Außenkontur (42) aufweisen, wobei die Segmente (41) an ihrem in Strömungsrichtung vorderen Abschnitt mit dem Luftleitkegel (5) in Wirkverbindung stehen, der an seinem in Strömungsrichtung vorderen Abschnitt eine umlaufende Ringkontur (51) aufweist, an der mehrere, zum Luftleitelement (4) gerichtete Kegelsegmente als Flächenelemente (52) schwenkbar gelagert sind, und wobei das Luftleitelement (4) und der Luftleitkegel (5) mit einem Betätigungsring (6) verlagerbar sind und die flächigen halbkreisbogenförmigen oder bogenförmigen Segmente (41) an ihren zur Mittellängsachse des Luftleitelementes (4) gerichteten inneren Abschnitt jeweils eine gerade und parallel zur Mittellängsachse des Luftleitelementes (4) verlaufende Kontur (43) aufweisen.

6. Luftdüse nach Anspruch 5, **dadurch gekennzeichnet, dass** das Luftleitelement (4) und der Luftleitkegel (5) so zueinander angeordnet sind, dass die an der umlaufenden Ringkontur (51) gelagerten Kegelsegmente (52) des Luftleitkegels (5) in einer nicht geschwenkten Stellung an der geraden Kontur (43) der halbkreisbogenförmigen Segmente (41) des Luftleitelementes (4) anliegen.

7. Luftdüse nach Anspruch 5, **dadurch gekennzeichnet, dass** dem Luftleitelement (4) ein Strömungsteilerelement (3) zugeordnet ist, das am Luftleitelement (4) in Strömungsrichtung entgegengesetzt zum Luftleitkegel (5) angeordnet ist und mehrere flächige Segmente (31) aufweist, die ausgehend von der Mittellängsachse des Strömungsteilerelementes (3) jeweils radial nach außen verlaufen und eine parallel zur Mittellängsachse verlaufende Außenkontur (32) aufweisen, die an ihrem in Strömungsrichtung vorderen Abschnitt in eine schräg nach innen in Richtung der Mittellängsachse verlaufende Kontur (33) abfällt.

8. Luftdüse nach Anspruch 7, **dadurch gekennzeichnet, dass** das Strömungsteilerelement (3) und der Luftleitkegel (5) so zueinander angeordnet sind, dass die an der umlaufenden Ringkontur (51) gelagerten Kegelsegmente (52) des Luftleitkegels (5) in einer vollständig geschwenkten Stellung an der schräg abfallenden Kontur (33) der flächigen Segmente (31) des Strömungsteilerelementes (3) anliegen.

9. Luftdüse nach Anspruch 5, **dadurch gekennzeichnet, dass** der Betätigungsring (6) am Luftleitelement (4) und am Luftleitkegel (5) abgestützt ist.

10. Luftdüse nach Anspruch 9, **dadurch ge kennzeichnet**, dass die Verbindung zwischen dem Betätigungsring (6) und dem Luftleitkegel (5) und/oder dem Luftleitelement (4) als Rastverbindung ausgestaltet ist, wobei am Betätigungsring (6) Vorsprünge (61) ausgestaltet sind, die mit konturgleichen Aussparungen (53) an der umlaufenden Ringkontur (51) des Luftleitkegels (5) in Wirkverbindung bringbar sind.

11. Luftdüse nach Anspruch 9, **dadurch gekennzeichnet, dass** die Verbindung zwischen dem Betätigungsring (6) und dem Luftleitkegel (5) und/oder dem Luftleitelement (4) als Kulissenführung ausgestaltet ist, wobei am Betätigungsring (6) Aussparungen (62) ausgestaltet sind, in die jeweils ein Abschnitt der flächigen Segmente (41) des Luftleitelementes (4) geführt ist.

12. Luftdüse nach Anspruch 1 oder 5, **dadurch gekennzeichnet, dass** der Einsatz oder das Luftleitelement (4) in einem zylinderförmigen Ring (2) drehbar gelagert ist, der an der Innenwand des Gehäuses fest oder drehbar(1) abgestützt ist.

13. Luftdüse nach Anspruch 4, **dadurch gekennzeichnet, dass** die Lagerrippen oder die Lagerschuhe federnd ausgebildet sind oder Schenkel aufweisen, die mittels Blatt- oder Druckfedern gegen den kugelförmigen Mantelring des Einsatzes oder des Luftleitelementes (4) drücken.

14. Luftdüse nach Anspruch 4, **dadurch gekennzeichnet, dass** der Einsatz (12) ein Strömungsrohr (14) oder einen Kanal aufweist, dessen Querschnitt mindestens am Einströmungsende so groß wie der Öffnungsquerschnitt des eckigen Trichters oder des Luftleitkegels (5) ist.

15. Luftdüse nach einem der vorhergehenden Ansprüche, **dadurch gekennzeichnet, dass** die Drosseleinrichtung und/oder die Verstellung mindestens eines verstellbaren Elementes der Drosseleinrichtung und/oder der Düse manuell direkt oder über eine mechanische Fernbedienung oder über Stellmotoren, die elektrisch steuerbar sind, verstellbar oder von Aktuatoren bestätigbar sind, die in Abhängigkeit von abgespeicherten Einstell-Nutzerdaten die Einstellungen verändern.

## Claims

1. Air nozzle for conducting an air flow out of an air feed shaft or an air feed duct in heating, ventilating or air-conditioning installations, particularly for passenger compartments in motor vehicles, consisting of a housing, which is insertable into a wall passage or fastenable therebehind and which comprises a rear connection for an air feed shaft or an air feed duct as well as a front air outlet opening, wherein a throttle device able to vary the air flow and/or an insert with a throttle device is or are provided in the interior space of the housing, **characterised in that** the throttle device consists of segment-shaped area elements (52) mounted at the inner walls of the housing (1) and/or at the inner walls of the insert with the throttle device, which elements are mounted to be pivotable about axes at one side extending transversely to the flow direction and which elements form a funnel or an air guide cone (5), and that an actuating ring (6) is mounted at the front at the housing (1) or the insert with the throttle device to be displaceable and/or rotatable, the actuating ring being so coupled by way of coupling elements and cam guides or gate guides with the area elements (52) that when these elements are pulled and/or pressed they pivot due to relative displacement with respect to the housing (1) or due to rotation in one rotational direction or the opposite rotational direction.

2. Air nozzle according to claim 1, **characterised in that** the area elements (52) are pivotably fastened internally to the inner wall of the housing (1) directly or to an insertable mounting ring (7) or are cut free from the circumferential wall of the housing (1) and are pivotably attached at one side or defined in shape and retained by way of a film hinge, that positioning ribs (8) are integrally formed or mounted on the area elements (52) to extend at an inclination longitudinally or in longitudinal direction, in which ribs guide cams (81), gate guides or longitudinal recesses are formed, in which entrainers (9) engage an actuating ring (6) or a cylindrical ring (2) supported in the housing, and that the area elements (52) pivot when relative displacement of the actuating ring (6) in longitudinal direction takes place or through rotation.

3. Air nozzle according to claim 1, **characterised in that** the area elements (52) are pivotably fastened internally to the inner wall of the housing (1) directly or to an insertable mounting ring (7) or are cut free from the circumferential wall of the housing (1) and are pivotably attached at one side or defined in shape and retained by way of a film hinge, that provided at the area elements (52) at the outer side or inner side or in longitudinal slots (10) are entrainers (9), which so co-operate with guide cams (81) or gate guides in projections (11) at the actuating ring (6) or with such guide cams (81) or gate guides inserted in a cylindrical ring (2) mounted therein that when displacing movement of the actuating ring (6) takes place the segment-shaped area elements (52) pivot and change the air penetration cross-section or that the projections are so defined in shape that these, on rotation of the actuating ring (6), pivot the area elements (52) when co-operation with the entrainers (9) takes place.

4. Air nozzle according to claim 1, 2 or 3, **characterised in that** provided at the inner side of the circumferential wall of the housing (1), at the mounting ring (2) or at the insert are mounting elements (71) or shell-shaped mounting shoes, which protrude at the inner side and which form, in particular, a three-point, four-point or five-point mounting, and which by their curved, resilient inner sides receive a nozzle insert (12), with a spherical circumferential ring (13) to be detented and pivotably movable, or that support arms with angled sections extending into the interior space of the spherical circumferential ring (13) are provided at the housing wall (1) or at the mounting ring (2), at which sections mounting elements (71) or bearing shoes are provided to protrude outwardly and press against the inner side of the spherical circumferential ring (13).

5. Air nozzle according to claim 1, 2 or 3, **characterised in that** the insert includes an air guide element (4), which is rotatably and/or pivotably supported in the housing (1) and which has a plurality of area segments (41), which starting from the centre longitudinal axis of the air guide element (4) each have a radially outwardly extending and semicircular or curved outer contour (42), wherein the segments (41) are operatively connected at the section thereof at the front in flow direction with the air guide cone (5), which has at the section thereof at the front in flow direction an encircling annular contour (51) at which are pivotably mounted a plurality of cone segments, which are directed towards the air guide element (4), as area elements (52), and wherein the air guide element (4) and the air guide cone (5) are displaceable by an actuating ring (6) and the area semicircular or curved segments (41) each have at the inner section thereof oriented towards the centre longitudinal axis of the air guide element (4) a straight contour (43) extending parallel to the centre longitudinal axis of the air guide element (4).

6. Air nozzle according to claim 5, **characterised in that** the air guide element (4) and the air guide cone (5) are so arranged relative to one another that the cone segments (52), which are mounted at the encircling annular contour (51), of the air guide cone (5) lie, in a non-pivoted setting, against the straight contour (43) of the semicircular segments (41) of the air guide element (4).

7. Air nozzle according to claim 5, **characterised in that** associated with the air guide element (4) is a flow divider element (3) which is arranged at the air guide element (4) opposite to the air guide cone (5) in flow direction and which comprises a plurality of area segments (31), which starting from the centre longitudinal axis of the flow divider element (3) each extend radially outwardly and have an outer contour (32), which extends parallel to the centre longitudinal axis and which at the section thereof at the front in flow direction drops away in a contour (33) extending at an inclination inwardly in the direction of the centre longitudinal axis.

8. Air nozzle according to claim 7, **characterised in that** the flow divider element (3) and the air guide cone (5) are so arranged relative to one another that the cone segments (52), which are mounted at the encircling annular contour (51), of the air guide cone (5) lie, in a completely pivoted setting, against the contour (33), which drops away at an inclination, of the area segments (31) of the flow divider element (3).

9. Air nozzle according to claim 5, **characterised in that** the actuating ring (6) is supported at the air guide element (4) and at the air guide cone (5).

10. Air nozzle according to claim 9, **characterised in that** the connection between the actuating ring (6) and the air guide cone (5) and/or the air guide element (4) is formed as a detent connection, wherein projections (61) are formed at the actuating ring (6) and can be brought into operative connection with cut-outs (53) of the same contour at the encircling annular contour (51) of the air guide cone (5).

11. Air nozzle according to claim 9, **characterised in that** the connection between the actuating ring (6) and the air guide cone (5) and/or the air guide element (4) is formed as a gate guide, wherein cut-outs (62), in each of which a respective section of the flat segments (41) of the air guide element (4) is guided, are formed at the actuating ring (6).

12. Air nozzle according to claim 1 or 5, **characterised in that** the insert or the air guide element (4) is rotatably mounted in a cylindrical ring (2) fixedly or rotatably (1) supported at the inner wall of the housing.

13. Air nozzle according to claim 4, **characterised in that** the mounting ribs or the mounting shoes are of resilient construction or have limbs which press by means of leaf springs or compression springs against the spherical circumferential ring of the insert or the air guide element (4).

14. Air nozzle according to claim 4, **characterised in that** the insert (12) comprises a flow pipe (14) or a channel, the cross-section of which at least at the inflow end is as large as the opening cross-section of the polygonal funnel or of the air guide cone (5).

15. Air nozzle according to any one of the preceding claims, **characterised in that** the throttle device and/or the adjustment of at least one adjustable element of the throttle device and/or the nozzle is or are adjustable manually directly or by way of a mechanical remote control or by way of electrically controllable setting motors or is or are actuable by actuators, which change the settings in dependence on stored user setting data.

## Revendications

1. Tuyère d'air pour guider un flux d'air à partir d'une goulotte d'alimentation ou d'une conduite d'alimentation en air dans les installations de chauffage, d'aération ou de climatisation, notamment pour les habitacles de véhicules, composée d'un carter qui peut être inséré dans une percée de paroi ou être fixé derrière celle-ci et qui présente un raccord arrière pour une goulotte d'alimentation en air et une ouverture sur la partie avant pour évacuer l'air, à l'intérieur du carter se trouvant un dispositif d'étranglement modifiant le flux d'air et/ou une utilisation avec un dispositif d'étranglement étant prévu, caractérisée en cela que le dispositif d'étranglement est composé d'éléments de surface (52) en forme de segments placés sur les parois intérieures du carter (1) et/ou sur les parois intérieures de l'insert avec le dispositif d'étranglement qui sont placés de manière à basculer autour d'axes passant sur un côté et en travers du sens de débit, formant un entonnoir ou un cône directeur d'air (5) que sur le carter (1) ou l'insert avec le dispositif d'étranglement un anneau d'actionnement (6) pouvant être glissé et/ou pivoté est placé sur la partie avant qui est couplé par des éléments de couplage et des guidages à courbes directrices ou des guidages à coulisse avec les éléments de surface (52) de telle sorte à ce que ceux-ci basculent en cas de traction et/ou de pression par déplacement relatif en face du carter (1) ou par rotation dans un sens de rotation ou dans le sens de rotation opposé.

2. Tuyère d'air selon la revendication 1 caractérisée en cela que les éléments de surface (52) sont fixés à l'intérieur directement sur la paroi intérieure du carter (1) ou sont fixés de manière à basculer sur un anneau de palier (7) remplaçable ou sont dégagés à partir du manteau du carter (1) et sont fixés ou formés de manière à basculer sur un côté et sont tenus par une charnière à film, que sur les éléments de surface (52) des nervures à palier (8) soient formées ou disposées dans le sens de la longueur ou de travers dans la longueur dans lesquelles les courbes de direction (81), les coulisses ou les rainures longitudinales sont placées dans lesquelles les entraîneurs (9) interviennent sur un anneau d'actionnement (6) ou sur un anneau en forme de cylindre (2) appuyé dans le carter et que avec le mouvement relatif de l'anneau d'actionnement (6) dans le sens de la longueur ou par rotation les éléments de surface (52) basculent.

3. Tuyère d'air selon la revendication 1 caractérisée en cela que
les éléments de surface (52) sont fixés de manière à basculer à l'intérieur sur la paroi intérieure du carter (1) directement ou sur un anneau à palier (7) insérable ou dégagés à partir du manteau du carter (1) et sont fixés ou formés de manière à basculer sur un côté et sont tenus par une charnière à film, que sur les éléments de surface (52) sur le côté extérieur ou intérieur ou dans les fentes en longueur (10) des entraîneurs (9) sont prévus qui agissent avec des courbes directrices (81) ou des coulisses dans les épaulements (11) sur l'anneau d'actionnement (6) ou avec des courbes directrices (81) ou des coulisses placées dans un anneau en forme de cylindre (2) de telle sorte à ce que en cas de déplacement de l'anneau d'actionnement (6) les éléments de surface en forme de segment (52) basculent ou la coupe de pénétration de l'air est modifiée ou à ce que les épaulements soient formées de telle sorte que ceux-ci en cas de rotation de l'anneau d'actionnement (6) fassent basculer les éléments de surface (52) en cas d'action avec les entraîneurs (9).

4. Tuyère d'air selon la revendication 1, 2 ou 3 caractérisée en cela que sur le côté intérieur du manteau du carter (1), sur l'anneau de maintien (2) ou en saillie à l'intérieur sur l'insert des éléments de palier (71) ou des coussinets de palier en forme de coque, formant notamment un appui à 3 points, 4 points ou 5 points, soient prévus qui avec leurs côtés intérieurs amortis et bombés logent de manière à s'enclencher et à basculer un insert de tuyère (12) avec un anneau de manteau en forme de bille(13) ou que sur la paroi du carter (1) ou sur l'anneau de maintien(2) des bras porteurs sont prévus avec des découpes angulaires suffisantes dans l'intérieur de l'anneau de manteau en forme de bille (13) sur lesquels des éléments de palier (71) ou des coussinets de palier en saillie vers l'extérieur, appuyant contre la partie intérieure de l'anneau de manteau en forme de bille, sont prévus.

5. Tuyère d'air selon la revendication 1, 2 ou 3 caractérisée en cela que l'insert contient un élément de direction de l'air (4) qui est soutenu de manière à pivoter et/ou à basculer dans le carter (1) et présente plusieurs segments (41) de grande taille qui passent depuis l'axe longitudinal médian de l'élément de direction de l'air (4) respectivement dans le sens radial vers l'extérieur et présentent un contour extérieur (42) en forme de demi-arc de cercle ou d'arc de cercle, les segments (41)
se trouvant dans une relation d'action dans leur section avant dans le sens de débit avec le cône directeur d'air (5) qui présente sur sa section avant dans le sens de débit un contour d'anneau sur le pourtour (51) sur lequel plusieurs segments de cône orientés sur l'élément directeur de l'air (4) sont placés de manière à basculer en tant qu'éléments de surface (52) et l'élément directeur d'air (4) et le cône directeur d'air (5) étant déplaçables avec un anneau d'actionnement (6) et les segments de grande taille en forme de demi-arc de cercle ou d'arc de cercle (41) présentant sur leur section intérieure orientée sur l'axe longitudinal médian de l'élément directeur d'air (4) respectivement un contour (43) passant de manière droite et parallèle à l'axe longitudinal médian de l'élément directeur d'air (4).

6. Tuyère d'air selon la revendication 5 caractérisée en cela que
l'élément directeur d'air (4) et le cône directeur d'air (5) sont placés de telle manière l'un par rapport à l'autre que les segments de cône (52) du cône directeur d'air (5) situés sur le contour périphérique de l'anneau (51) sont situés dans une position non basculée sur le contour droit (43) des segments en demi-arc de cercle (41) de l'élément directeur d'air (4).

7. Tuyère d'air selon la revendication 5 caractérisée en cela qu'un élément de division du débit (3) est attribué à l'élément directeur d'air (4), qui est placé sur l'élément directeur d'air (4) dans le sens de débit opposé au cône directeur d'air (5) et qui présente plusieurs segments de grande taille (31) qui passent respectivement en partant de l'axe longitudinal médian de l'élément de division du débit (3) de manière radiale vers l'extérieur et présentent un contour extérieur (32) se trouvant en parallèle de l'axe longitudinal médian qui sur sa section action dans le sens du débit tombe en biais vers l'intérieur dans un contour passant le sens de l'axe longitudinal médian (33).

8. Tuyère d'air selon la revendication 7 caractérisée en cela que l'élément de division du débit (3) et le cône directeur d'air (5) sont placés de telle manière l'un par rapport à l'autre que les segments de cône (52) du cône directeur d'air (5) situés sur le contour périphérique de l'anneau (51) sont situés dans une position entièrement basculée sur le contour tombant en biais (33) des segments de grande surface (31) de l'élément de division du débit (3).

9. Tuyère d'air selon la revendication 5 caractérisée en cela que l'anneau d'actionnement (6) est appuyé sur l'élément directeur d'air (4) et sur le cône directeur d'air (5).

10. Tuyère d'air selon la revendication 9 caractérisée en cela que le lien entre l'anneau d'actionnement (6) et le cône directeur d'air (5) et/ou l'élément directeur d'air (4) est réalisé en tant que liaison d'encliquetage sur l'anneau d'actionnement (6) des saillies (61) étant réalisées qui peuvent être mises en liaison d'action avec les encoches similaires au contour (53) sur le contour périphérique de l'anneau (51) du cône directeur d'air (5).

11. Tuyère d'air selon la revendication 9 caractérisée en cela que le lien entre l'anneau d'actionnement (6) et le cône directeur d'air (5) et/ou l'élément directeur d'air (4) est réalisé en tant que guidage à coulisse, sur l'anneau d'actionnement (6), des encoches (62) étant réalisées dans lesquelles respectivement une section des segments de grande surface (41) de l'élément directeur d'air (4) est guidée.

12. Tuyère d'air selon la revendication 1 ou 5 caractérisée en cela que l'insert ou l'élément directeur d'air (4) est placé dans un anneau de forme cylindrique (2) de manière à pivoter qui est soutenu de manière fixe ou pivotante (1) sur la paroi intérieure du carter.

13. Tuyère d'air selon la revendication 4 caractérisée en cela que les nervures à palier ou les coussinets de palier sont formés de manière amortie ou présentent branches qui appuient à l'aide de ressortes à feuille ou de pression contre l'anneau de manteau en forme de bille de l'insert ou de l'élément directeur d'air (4).

14. Tuyère d'air selon la revendication 4 caractérisée en cela que l'insert (12) présente un tuyau de débit (14) ou un canal dont la coupe est au moins aussi grande à l'extrémité d'afflux que la coupe d'ouverture de l'entonnoir carré ou du cône directeur d'air (5).

15. Tuyère d'air selon l'une des revendications précédentes caractérisée en cela que le dispositif d'étranglement et/ou le réglage d'au moins un élément réglable du dispositif d'étranglement et/ou de la tuyère peuvent être réglés manuellement directement ou par une télécommande mécanique ou par des moteurs de réglage à commande électrique ou peuvent être actionnés par des actionneurs qui modifient les réglages en fonction des données de paramétrage enregistrées de l'utilisateur.
